# EUROPÄISCHE PATENTSCHRIFT

(11) **EP 2 269 130 B1**
(45) Veröffentlichungstag und Bekanntmachung des Hinweises auf die Patenterteilung: **28.02.2018**
(21) Anmeldenummer: 09734478.2
(22) Anmeldetag: 02.04.2009
(51) Int. Cl.: G01B 21/04, G01B 11/00, G06F 3/01, G06F 3/048, G06F 3/0488

(54) **DARSTELLUNG VON ERGEBNISSEN EINER VERMESSUNG VON WERKSTÜCKEN IN ABHÄNGIGKEIT DER ERFASSUNG DER GESTE EINES NUTZERS**
DISPLAY OF RESULTS OF A MEASUREMENT OF WORK PIECES AS A FUNCTION OF THE DETECTION OF THE GESTURES OF A USER
REPRÉSENTATION DES RÉSULTATS DE MESURE DE PIÈCES EN FONCTION DE LA DÉTECTION DES GESTES D'UN UTILISATEUR

(30) Priorität: 21.04.2008 DE 102008020772
(43) Veröffentlichungstag der Anmeldung: 05.01.2011
(73) Patentinhaber: Carl Zeiss Industrielle Messtechnik GmbH, 73447 Oberkochen (DE)
(72) Erfinder: ROITHMEIER, Robert, 82418 Seehausen am Staffelsee (DE)
(74) Vertreter: Brunotte, Joachim Wilhelm Eberhard
(86) Internationale Anmeldenummer: PCT/EP2009/002414
(87) Internationale Veröffentlichungsnummer: WO 2009/129916

(56) Entgegenhaltungen:
- EP-A- 1 537 959
- DE-A1- 19 845 030
- US-A1- 2003 125 901
- US-A1- 2007 216 642
- US-A1- 2008 013 793
- US-B1- 6 191 773
- QUEK F K H: "TOWARD A VISION-BASED HAND GESTURE INTERFACE" VIRTUAL REALITY SOFTWARE AND TECHNOLOGY. PROCEEDINGS OF THEVRST CONFERENCE, XX, XX, 23. August 1994 (1994-08-23), Seiten 17-31, XP000675678

## Beschreibung

Die Erfindung betrifft ein Verfahren und eine Anordnung zum Darstellen von Ergebnissen einer Vermessung von Werkstücken. Die Erfindung betrifft insbesondere die Darstellung von Messergebnissen aus dem Betrieb von Koordinatenmessgeräten. Unter einem Werkstück wird hier jeder mögliche Gegenstand verstanden, der handwerklich oder maschinell oder in sonstiger Weise gefertigt werden kann.

Unter Koordinatenmessgeräten werden jegliche Geräte verstanden, die in der Lage sind, Koordinaten, insbesondere Oberflächenkoordinaten von Werkstücken, zu messen. Dabei können z.B. optische und/oder mechanische (d.h. mechanisch antastende) Messverfahren zum Einsatz kommen. Zu den optischen Messverfahren gehören auch Verfahren, die mittels invasiver Strahlung Informationen über das Innere des Werkstücks (z. B. über Materialgrenzen im Inneren) gewinnen. Wenn in dieser Beschreibung von einer Bestimmung von Koordinaten eines Werkstücks die Rede ist, schließt dies auch die Bestimmung von Abmessungen, wie z. B. einer Breite oder eines Durchmessers des Werkstücks ein.

Mit Hilfe moderner Messverfahren lassen sich Werkstücke nahezu vollständig vermessen. Beim Einsatz von Koordinatenmessgeräten, die lediglich Oberflächen von Werkstücken vermessen können, gilt dies entsprechend auch für die Werkstückoberflächen. Die Messergebnisse werden in der Regel auf einem zweidimensionalen Darstellungsmedium wie Papier oder auf einem Computerbildschirm dargestellt. Wenn dem Betrachter ein Exemplar des Werkstücks (dabei kann es sich um das mit dem Koordinatenmessgerät vermessene Exemplar oder um ein anderes Exemplar handeln) zur Verfügung steht, ist es von besonderem Interesse, die Messergebnisse den entsprechenden Bereichen des Exemplars zuzuordnen. Hierzu muss der Betrachter die Ausrichtung und Position des Exemplars relativ zum Betrachter und/oder die Darstellung der Messergebnisse an die Ausrichtung und Position des Exemplars relativ zum Betrachter anpassen. Z.B. möchte der Betrachter bei starken Abweichungen der Form oder Abmessungen zwischen Sollzustand und Istzustand des Werkstücks, die in einem bestimmten Bereich des Werkstücks auftreten, möglichst auf einen Blick erkennen können, um welchen Bereich des Werkstücks es sich handelt. Um z.B. einen Oberflächenbereich des Werkstücks mit bloßem Auge oder mit optischen Hilfsmitteln (z.B. Lupe oder Mikroskop) genauer betrachten zu können, wobei es sich bei dem Bereich um einen stark abweichend von Sollvorgaben gestalteten Bereich handelt, muss der Betrachter bei einer Darstellung der Messergebnisse auf einem Computerbildschirm seinen Blick abwechselnd auf den Computerbildschirm und auf das Exemplar richten. Insbesondere wenn der fehlerhafte Bereich sehr klein ist, kann der Betrachter dennoch nicht sicher erkennen, um welchen Bereich des tatsächlich vorhandenen Exemplars des Werkstücks es sich handelt.

Ferner besteht bei der Darstellung und Zuordnung von Messergebnissen häufig das Problem, dass eine Vielzahl von Informationen zur Verfügung steht, die aus der Vermessung des Werkstücks gewonnen wurden. Manche Messprotokolle weisen mehrere hundert Seiten Papier oder entsprechende Seiten eines elektronischen Dokuments auf und enthalten z.B. tausende einzelner Prüfmerkmale und Auswertungen. Bei einer Vielzahl von Messergebnissen ist es besonders schwierig, das Messergebnis dem zugehörigen Bereich des Werkstücks zuzuordnen.

Aus US 2003/0125901 A1 sind ein Verfahren und ein System zum Testen eines Zielobjekts auf Übereinstimmung mit existierenden geometrischen Dimensionen und Toleranzerfordernissen bekannt. Ein ausgewähltes Merkmal des Targets wird gemessen und die existierenden geometrischen Dimensionen und Toleranzerfordernisse werden in eine Benutzerschnittstelle eingegeben. Das Eingeben schließt das Auswählen eines Symbols ein, das ein grafisches Symbol ist, welches eine geometrische Dimension und eine Toleranzcharakteristik repräsentiert. In dem Dokument wird auch beschrieben, dass ein Nutzer bestimmen kann, ob ein bestimmtes Merkmal, welches getestet wird, bereits zuvor gemessen worden ist. Der Benutzer kann das zuvor gemessene Merkmal auswählen. Es gibt zwei Optionen zum Auswählen dieses Merkmals. Zum einen kann das Merkmal aus einer Merkmalliste ausgewählt werden, welche für jedes gemessene Merkmal ein Label enthält. Gemäß einer zweiten Option ist es dem Nutzer möglich, das gemessene Merkmal von dem Bildschirm, d.h. unter Nutzung einer CAD-ähnlichen Schnittstelle, auszuwählen. Der Nutzer kann das Merkmal, das zu testen ist, auswählen, indem er auf eine grafische Repräsentierung des Merkmals deutet. Durch Auswahl eines Knopfes wird eine CAD-ähnliche Schnittstelle angezeigt, die eine perspektivische Ansicht des Targets zeigt. Der Benutzer verwendet eine Zeigeeinrichtung, wie Maus oder einen berührungsempfindlichen Bildschirm, um das zu messende Merkmal auf dem Target auszuwählen.

Bei der perspektivischen Darstellung des Targets handelt es sich jedoch nicht um ein Bild eines vorhandenen Exemplars des Werkstücks. Daher fällt die Zuordnung zu einem solchen, tatsächlich vorhandenen Exemplar schwer. Auch hilft die US 2003/0125901 A1 nicht weiter, wenn eine Vielzahl von Messergebnissen bereits vorliegt, die auf einem Bildschirm gleichzeitig dargestellt werden. Um ein bestimmtes Messergebnis auszuwählen, schlägt die US 2003/0125901 A1 lediglich vor, aus einer Liste auszuwählen oder eine CAD-ähnliche Repräsentierung des Werkstücks für die Auswahl zu benutzen. Wenn dem Nutzer aber z.B. bei einem tatsächlich vorhandenen Exemplar des Werkstücks ein Bereich auffällt, der scheinbar nicht dem Sollzustand entspricht, ist die Zuordnung des Bereichs zu der CAD-ähnlichen Darstellung unter Umständen schwierig.

Wenn ein Nutzer sich im Bereich einer Messeinrichtung befindet, sind Sicherheitsvorschriften zu beachten. Z. B. kann es gefährlich sein, das Werkstück anzufassen, während die Messeinrichtung betrieben wird. Häufig darf sich daher vor und während der Messung keine Person in der Nähe des Werkstücks befinden. Die Messergebnisse sollen erst nachträglich ausgewählt werden können, wenn die Vermessung abgeschlossen ist. Dann kann der Nutzer das Werkstück u. U. auch wieder aus der Nähe betrachten.

Die DE 198 45 030 A1 beschreibt ein Bildsystem, das zur Wiedergabe von Bildinformationen vorgesehen ist. Das Bildsystem weist eine Projektionsfläche auf, auf der Bildinformation dargestellt wird. Zur Steuerung der Wiedergabe der Bildinformation erfasst eine optische Detektoreinrichtung die Gestik einer Bedienperson und eine Steuereinrichtung wertet die Ausgangsdaten der Detektoreinrichtung zur Steuerung der Wiedergabe der Bildinformation aus. Die Steuereinrichtung kann Mittel zur Bildverarbeitung enthalten, wobei die Steuereinrichtung die Ausgangsdaten der Detektoreinrichtung zur Steuerung der Mittel zur Bildverarbeitung auswertet. Es besteht dann bei geeigneter Ausbildung der Mittel zur Bildverarbeitung die Möglichkeit, alle sonst beispielsweise mit Maussteuerung üblichen Bildverarbeitungsschritte, z.B. Fensterung, Vermessen von Objekten, 3D-Funktionen usw., durch Gestik zu steuern.

Die EP 1 537 959 A2 beschreibt ein Verfahren und ein System zum off-line Programmieren eines industriellen Roboters. Menschliche Gesten werden dazu verwendet, die off-line Programmierung durchzuführen. Der Betreiber hat die Flexibilität, sich um das Objekt herum zu bewegen und Wegpunkte auf dem zu programmierenden Pfad zu zeigen. Das Ziel ist, ein neues Roboterprogramm zu machen. Während der Programmierung kann der Betreiber verschiedene Typen von Gesten verwenden: Handbewegungsgesten und symbolische Gesten. Die symbolischen Gesten entsprechen 1:1 einer Intention. Solche Gesten werden typischerweise für eine Systemfunktionalität verwendet, z.B. Start/Stopp, Menü, Aufwärts-/ Abwärtsscrollen, Speichern, Laden und Beenden.

Die US 2008/0013793 A1 offenbart ein Gestenerkennungs-Simulationssystem und -Verfahren. Das System weist ein dreidimensionales Displaysystem auf, das ein dreidimensionales Bild von zumindest einem simulierten Objekt darstellt. Das Objekt hat zumindest eine funktionale Komponente. Das System empfängt eine Eingabegeste in Verbindung mit einem sensorlosen Eingabeobjekt von einem Benutzer. Die Eingabegeste kann dadurch bestimmt werden, dass Änderungen in der dreidimensionalen Form und/oder dem physikalischen Ort des sensorlosen Eingabeobjekts relativ zu der zumindest einen funktionalen Komponente bestimmt werden.

Es ist eine Aufgabe der vorliegenden Erfindung, ein Verfahren und ein Anordnung der eingangs genannten Art anzugeben, die es dem Nutzer erleichtern, Messergebnisse aus der Vermessung von Koordinaten eines Werkstücks einem entsprechenden, zugehörigen Bereich eines vorhandenen Exemplars des Werkstücks zuzuordnen.

Es wird vorgeschlagen, dass Gesten, die ein Nutzer ausführt, erkannt und einzelnen Messergebnissen zugeordnet werden. Wenn eine Geste automatisch erkannt wurde, wird zumindest ein zugeordnetes Messergebnis ausgewählt oder entschieden, dass kein zugeordnetes Messergebnis vorhanden ist. Wenn zumindest ein Messergebnis ausgewählt worden ist, kann lediglich dieses Messergebnis bzw. diese ausgewählten Messergebnisse dargestellt werden. Unter einer solchen selektiven Darstellung von zumindest einem Messergebnis wird auch verstanden, dass eine bereits vorhandene Darstellung des Messergebnisses oder der Messergebnisse entsprechend der Auswahl abgeändert wird. Z.B. kann in einem Bildschirmbereich, in dem ein Bereich des Werkstücks dargestellt wird, welcher dem ausgewählten Messergebnis zugeordnet ist, lediglich das ausgewählte Messerergebnis dargestellt werden. Alternativ kann das ausgewählte Messergebnis anders als zuvor dargestellt werden, jedoch können die nicht ausgewählten Messergebnisse dennoch dargestellt werden. Insbesondere können daher Messergebnisse in anderen Bereichen als der durch die Auswahl betroffene Bereich weiterhin unverändert dargestellt werden und/oder z.B. ausgeblendet werden. Unter einer Darstellung eines ausgewählten Messergebnisses wird auch verstanden, dass die für die Darstellung bzw. geänderte Darstellung erforderlichen Informationen für die Darstellungseinrichtung erzeugt werden. Die Darstellungseinrichtung muss nicht zwangsläufig selbst zur erfindungsgemäßen Anordnung gehören.

Wenn in dieser Beschreibung von einem Werkstück die Rede ist, schließt dies auch den Fall einer Anordnung von mehreren einzelnen Teilen ein.

Bei dem für die Betrachtung zur Verfügung stehenden Werkstück muss es sich nicht zwangsläufig um das Exemplar des Werkstücks handeln, das vermessen wurde. Z.B. kann es sich auch um ein anderes Exemplar aus der gleichen oder einer vergleichbaren Produktion oder um ein Exemplar handeln, welches weitgehend oder exakt (z. B. weil es ein Meisterteil ist) dem Sollzustand entspricht. Dies ist insbesondere dann von Vorteil, wenn eine Mehrzahl verschiedener Exemplare des Werkstücks vermessen wird und die Messergebnisse vom Betrachter begutachtet werden sollen, wie es bei einer Serienfertigung der Fall ist.

Unter einer Geste wird insbesondere eine von der Hand oder beiden Händen des Nutzers ausgeführte Bewegung verstanden. Z.B. kann mit der Geste auch ein Form- und/oder Lage-Symbol (z.B. gemäß der Norm ISO-1101, d. h. der Begriff Form- und/oder Lage-Symbol ist insbesondere im Sinne dieser Norm zu verstehen und optional können insbesondere die in dieser Norm vordefinierten Symbole durch die Geste dargestellt werden) im Raum oder an einer Oberfläche (z.B. einer Bildschirmoberfläche) dargestellt werden. Z.B. kann der Nutzer mit seinem ausgestreckten Zeigefinger eine Kreisbewegung im Raum oder an der Oberfläche ausführen. Hierdurch wird somit eine vordefinierte Geste "Kreis" ausgeführt, die in der ISO-1101 z. B. dem Form-Symbol "Überprüfung der Rundheitstoleranz" entspricht. Andere Form- und/oder Lage-Symbole, die z. B. einem Kegelstumpf, einem Parallelogramm (und damit einer Ebene), einem Halbkreis, einem Zylinder, einer Geraden, oder anderen Formen entsprechen, können ebenfalls durch eine Geste nachgeahmt werden. Eine Geste kann alternativ oder zusätzlich zu den genannten Möglichkeiten (d.h. insbesondere alternativ oder zusätzlich zu den oben genannten Form-Symbolen) andere Symbole definieren, die verschiedene Formen miteinander und/oder mit Auswertungsarten in Beziehung setzen, z. B. ein schräg verlaufender Pfeil, parallele schräg verlaufende Pfeile, die durch eine gerade Linie verbunden sind, zwei konzentrische Kreise, die Schenkel von einem spitzen Winkel oder von einem rechten Winkel, zwei parallele gerade Linien, zwei nicht parallele gerade Linien, die den Umrissen eines Kegelstumpfes entsprechen, oder ein Kreis mit einem Fadenkreuz.

Die durch die Gesten nachgeahmten Symbole betreffen daher vorzugsweise nicht nur die Form (z.B. Kreis, Kegel, Zylinder, Profil, ebene Fläche usw.) des Werkstücks oder eines Bereichs des Werkstücks, sondern betreffen alternativ oder zusätzlich die Art der Auswertung (z.B. Geradlinigkeit, Ebenheit, Rundheit, Profil einer Linie, Profil einer Oberfläche, Rechtwinkligkeit, Winkligkeit, Parallelheit, Symmetrie, Konzentrizität usw.). Z. B. mit dem Symbol "Rundlauftoleranz" gemäß ISO-1101 wird bezogen auf eine Fläche des Werkstücks eine Toleranz zwischen einer ideal kreisrunden Fläche und einem Oberflächenbereich des Werkstücks ausgewählt.

Vorzugsweise ist eine entsprechende Vielzahl von Gesten vordefiniert. Durch eine Erkennung der Geste, z.B. durch eine Bilderfassungs- und Erkennungseinrichtung oder durch einen berührungsempfindlichen Bildschirm, kann eine etwaig vorhandene vordefinierte Geste festgestellt werden, wodurch die Auswahl zumindest eines Messergebnisses ausgelöst wird, das der Geste entspricht. Bevorzugt wird dabei, dass das Messergebnis Koordinaten von Messpunkten in Beziehung zu Sollwerten und/oder Sollzuständen des Werkstücks setzt.

Gemäß einem weiteren Gedanken der vorliegenden Erfindung wird die Auswahl des zumindest einen Messergebnisses nicht ausschließlich abhängig von der Geste vorgenommen, sondern außerdem abhängig von dem Ort und/oder der Ausrichtung der Geste. Der Ort und/oder die Ausrichtung der Geste werden vorzugsweise bezüglich eines tatsächlich vorhandenen Exemplars des Werkstücks und/oder bezüglich einer bildlichen Darstellung des tatsächlich vorhandenen Exemplars erfasst. Z.B. führt der Nutzer eine vordefinierte Geste in unmittelbarer Nähe des vorhandenen Exemplars aus, und zwar vorzugsweise in dem Bereich des Exemplars, der dem auszuwählenden Messergebnis zugeordnet ist. Wenn die Geste an einem dargestellten Bild ausgeführt wird, ist die Erfassung der Position und/oder Ausrichtung der Geste vorzugsweise auf das Koordinatensystem der Bild-Darstellungseinrichtung bezogen, z.B. auf die zweidimensionale Oberfläche eines berührungsempfindlichen Bildschirms.

Sind z. B. zumindest zwei gleichartige Messergebnisse vorhanden, die beispielsweise durch dasselbe Symbol auswählbar sind, jedoch verschiedenen Orten und/oder Bereichen des Werkstücks zugeordnet sind (z. B. Rundheit von zwei verschiedenen Bohrungen), wird aus der erfassten Position der Geste ermittelt, welches Messergebnis vom Nutzer durch seine Geste ausgewählt wurde.

Die Geste kann mit Hilfe eines Gegenstandes ausgeführt werden, z.B. einem Griffel oder einem anderen länglichen, stabförmigen Gegenstand. Dabei kann der Gegenstand Mittel aufweisen, mit denen der Nutzer ein Signal an die Gesten-Erfassungseinheit ausgeben kann. Z.B. kann ein Griffel mit einem Betätigungselement und einer drahtlosen Sendeeinrichtung ausgestattet sein, so dass bei Betätigung des Betätigungselements ein Signal von dem Griffel (oder dem anderen Gegenstand) zu der Gesten-Erfassungseinrichtung ausgegeben wird. Mit einem solchen Signal kann der Nutzer definieren, dass die momentan eingenommene Position und/oder Ausrichtung seiner Hand oder des Gegenstandes für die Geste von Bedeutung sind.

Vorzugsweise jedoch ist die Gesten-Erfassungseinrichtung so ausgestaltet, dass sie durch eine oder mehrere Hände ausgeführte Gesten erkennt, wobei keinerlei weitere Gegenstände erforderlich sind, um die Geste auszuführen. Dies schließt nicht aus, dass die Hand einen Gegenstand trägt, wie z.B. einen Ring am Finger. Dieser Gegenstand ist jedoch für die Ausführung der Geste nicht erforderlich und nicht von Bedeutung.

Wenn die Geste am vorhandenen Exemplar des Werkstücks ausgeführt wird, kann der Nutzer bei der Ausführung der Geste das Exemplar berühren oder nicht berühren. In beiden Fällen kann die Geste dennoch einem bestimmten Bereich des Exemplars zugeordnet werden. Insbesondere bei Ausführung der Geste am vorhandenen Exemplar, aber auch wenn die Geste an einem Bildschirm ausgeführt wird, kann zumindest eine Kamera vorhanden sein, die fortlaufend oder wiederholt Bilder aufnimmt und dadurch die Geste erfasst. Es ist auch möglich, dass lediglich ein Bild pro Geste erfasst wird. In diesem Fall sind die Gesten so definiert, dass sie ohne Bewegung der Hand eine Auswahl von zumindest einem Messergebnis ermöglichen. Z.B. kann der Benutzer jeweils mit dem Zeigefinger der rechten Hand und der linken Hand auf einen Punkt an der Oberfläche des Exemplars oder des Bildes des Exemplars deuten, wodurch diese beiden Oberflächenpunkte bestimmt werden. Dem kann z.B. die Auswertung des Abstandes zwischen zwei Punkten zugeordnet sein, die jeweils dem durch den Zeigefinger ausgewählten Punkt entsprechen oder am nächsten liegen. Bei den Punkten, die für eine Auswahl überhaupt zur Verfügung stehen, kann es sich um besondere Punkte handeln, wie z. B. Punkte an Ecken des Werkstücks. Durch eine solche Beschränkung der für eine Auswahl zur Verfügung stehenden Punkte wird die Auswahl von Punkten, die für sinnvolle Messergebnisse von Bedeutung sind, erleichtert.

Z.B. bei der Auswahl eines Punktes an der Oberfläche des Werkstücks, aber auch in anderen Fällen, kann bei der Auswahl des Messergebnisses abhängig von der Art der erkannten Geste geprüft werden, welchen Punkten oder Bereichen an der Oberfläche des Werkstücks eine der Geste entsprechende Auswertung und damit ein entsprechendes Messergebnis zugeordnet ist. Dann kann automatisch entschieden werden, dass das Messergebnis ausgewählt wird, welches dem Ort zugeordnet ist, der dem durch den Nutzer ausgewählten Ort am nächsten liegt. Es ist jedoch auch möglich, in Zweifelsfällen vom Benutzer eine Bestätigung in Form einer weiteren Geste und/oder in anderer Form zu verlangen. Z.B. kann eine Vorauswahl von einer Mehrzahl von möglichen Messergebnissen automatisch getroffen werden, die sich aus der Geste ergibt. Diese vorausgewählten Messergebnisse können am Bildschirm dargestellt werden und der Nutzer kann auf eine vordefinierte Weise (z.B. durch Bedienung einer Tastatur, Computermaus und/oder durch eine weitere Geste) eine weitere Auswahl treffen, d.h. von den vorausgewählten Messergebnissen zumindest eines eliminieren. Das oder die verbleibenden Messergebnisse können dann dargestellt werden.

Grundsätzlich gilt in dieser Beschreibung, dass die Auswahl eines mittels einer Geste auch zu einer Eliminierung führen kann. Die daraus folgende Darstellung des ausgewählten des Ergebnisses kann also darin bestehen, dass dieses Messergebnis nicht mehr dargestellt wird.

Außer den Gesten, die eine Auswahl von zumindest einem Messergebnis bedeuten, kann durch zumindest eine weitere Geste ein weiterer Prozess ausgelöst werden, z.B. dass das als Folge der ersten Geste ausgewählte Messergebnis dargestellt, verworfen, gelöscht, ausgedruckt, abgespeichert und/oder zu einer anderen Einrichtung weitergeleitet wird.

Die Erfindung betrifft insbesondere das Darstellen von Messergebnissen von Werkstücken, die in einer Serienfertigung gefertigt werden. Z.B. können im Rahmen der Serienfertigung einzelne oder alle gefertigten Exemplare von einem Koordinatenmessgerät oder einer Anordnung von Koordinatenmessgeräten vermessen werden. Die daraus erhaltenen Messergebnisse können dann z.B. an einer anderen Stelle der Fertigungsanlage, an der sich die gefertigten Exemplare vorbeibewegen, durch Gesten eines Nutzers ausgewählt werden. Z.B. steht an dieser Stelle der Fertigungsanlage ein Bildschirm oder eine Bild- oder Strahlenprojektionsanlage zur Verfügung, mit der oder denen das oder die ausgewählten Messergebnisse unmittelbar an dem Exemplar oder in unmittelbarer Nähe zu dem Exemplar dargestellt werden. Bei der Serienfertigung ist es von besonderem Vorteil, ohne Hilfsmittel aus einer Vielzahl von Messergebnissen bestimmte Messergebnisse auswählen zu können, um möglichst frühzeitig in den Fertigungsprozess eingreifen zu können, wenn bei der Fertigung Fehler auftreten.

Insbesondere wird Folgendes vorgeschlagen: Ein Verfahren zum Darstellen von Ergebnissen einer Vermessung eines Werkstücks, wobei
a1) eine vordefinierte Geste eines Nutzers, die der Nutzer an einem vorhandenen Exemplar des Werkstücks ausführt, erfasst und erkannt wird, oder
a2) eine vordefinierte Geste eines Nutzers, die der Nutzer an einem Bild eines vorhandenen Exemplars des Werkstücks ausführt, erfasst und erkannt wird
b) wobei bei der Erfassung der Geste zumindest eine Position, an der die Geste ausgeführt wird, erfasst wird und
c) abhängig von der erkannten Geste und der erfassten Position der Geste ein Messergebnis ausgewählt und dargestellt wird.

Ferner wird eine Anordnung zum Darstellen von Ergebnissen einer Vermessung eines Werkstücks vorgeschlagen, wobei die Anordnung folgendes aufweist:
i. eine Schnittstelle zum Empfangen der Ergebnisse der Vermessung und/oder einen Speicher zum Speichern der Ergebnisse der Vermessung,
ii. eine Gesten-Erfassungseinrichtung zum Erfassen einer vordefinierten Geste eines Nutzers, die der Nutzer an einem vorhandenen Exemplar des Werkstücks ausführt, oder zum Erfassen einer vordefinierten Geste eines Nutzers, die der Nutzer an einem Bild eines vorhandenen Exemplars des Werkstücks ausführt, erfasst,
iii. eine Positions-Erfassungseinrichtung zum Erfassen einer Position, an der die Geste ausgeführt wird,
iv. eine Erkennungseinrichtung zum Erkennen der Geste als eine vordefinierte Geste und
v. eine Auswahleinrichtung zum Auswählen eines Messergebnisses der Bestimmung von Koordinaten des Werkstücks abhängig von der erfassten Position und der erkannten Geste.

Zu der Anordnung kann außerdem eine Bild-Darstellungseinrichtung gehören, auf der das ausgewählte Messergebnis dargestellt wird.

Außer der Erfassung der Position sind in vielen Fällen auch die Erfassung der Ausrichtung der Geste und die Berücksichtigung der Ausrichtung für die Auswahl des Messergebnisses von Vorteil. Z.B. kann bei Ausführung einer Kreisbewegung ein unterschiedliches Messergebnis ausgewählt werden, abhängig davon, ob der Kreis in horizontaler Ebene, in vertikaler Ebene oder in einer anderen Ebene liegt. Dementsprechend kann außer einer Positions-Erfassungseinrichtung zum Erfassen der Position der Geste alternativ oder zusätzlich eine Ausrichtungs-Erfassungseinrichtung vorgesehen sein. Dabei kann es sich bei diesen beiden Erfassungseinrichtungen auch um dieselbe Erfassungseinrichtung handeln. Z.B. bei einer Erfassung mit Hilfe zumindest einer Kamera kann die Auswertung der von der Kamera aufgenommenen Bilder sowohl die Position als auch die Ausrichtung der Geste ergeben.

Insbesondere wenn auch die Ausrichtung der Geste für die Auswahl der Messergebnisse von Bedeutung ist, wird bevorzugt, dass zur Erfassung der Geste sowie deren Position und/oder Ausrichtung eine Mehrzahl von Kameras eingesetzt wird, die unter verschiedenen Blickwinkeln auf den Bereich gerichtet sind, in dem die Geste ausgeführt werden kann.

Die Zuordnung zwischen einem Messergebnis und einer Geste kann z.B. dadurch erlernt werden, dass in einem Trainingsprozess der Erfassungseinrichtung beigebracht wird, welche Geste welchem Messergebnis oder welcher Art von Messergebnissen zugeordnet ist. Hierzu führt der Benutzer z.B. einmal oder mehrmals die Geste aus und ordnet die Geste dem gewünschten Messergebnis zu. Dabei wird die Geste vorzugsweise keinem konkreten, durch Vermessung eines bestimmten Exemplars gewonnenen Messergebnis zugeordnet, sondern einer Art von Messergebnissen, z.B. der Bestimmung des Durchmessers einer Kugel.

Bei den für die Auswahl zur Verfügung stehenden Messergebnissen kann es sich um Messergebnisse beliebiger Art handeln. Dementsprechend kann auch die Art der Darstellung des zumindest einen ausgewählten Messergebnisses verschieden sein. Z. B. können besonders fehlerhafte Oberflächenbereiche mit Hilfe von Symbolen, Fähnchen und/oder Balken, die abhängig von dem Grad einer Sollwert-Istwertabweichung größer oder kleiner gewählt werden, markiert werden. Auch Zahlenangaben und/oder Beschriftungen können zur Darstellung der Messergebnisse verwendet werden. Insbesondere können sämtliche Arten von Auswertungen in Zusammenhang mit der Erfindung vorkommen, die in der Norm ISO 1101 (bzw. in vergleichbaren Normen) enthalten sind. Die Auswertungen können zu entsprechenden Messergebnisse führen, aus denen gemäß der vom Nutzer ausgeführten Geste zumindest ein Messergebnis ausgewählt wird.

Eine häufig vorkommende Art einer Auswertung ist die Auswertung einer Kontur, z. B. der Rundheit, Ebenheit oder Linearität. Zur besseren Darstellung des ausgewählten Ergebnisses kann der Konturverlauf überhöht dargestellt werden.

Z. B. können die Messergebnisse auch mit Hilfe von verschiedenen Farben und/oder Graustufen auf einem Bildschirm oder Display dargestellt werden, wobei die einzelnen Farben und/oder Graustufen jeweils einer Kategorie von Messergebnissen entsprechen. Z.B. können Oberflächenbereiche des Werkstücks, die stärker von einem Sollzustand des Werkstücks abweichen, in einer anderen Farbe dargestellt werden als Oberflächenbereiche, die nicht oder nur wenig von dem Sollzustand abweichen. Jedem Grad der Abweichung kann eine Farbe zugeordnet sein. Die Abweichung kann z.B. in einer Abweichung der Position eines Oberflächenpunktes relativ zu einem Bezugspunkt und/oder in einer Abweichung des Verlaufs (z.B. Welligkeit oder Rauhigkeit) der Oberfläche bestehen. Die Darstellung von Messergebnissen mit Hilfe von Farben und/oder Graustufen wird in der Literatur als Falschfarbendarstellung bezeichnet.

Das ausgewählte Messergebnis kann z. B vorzugsweise lagerichtig in Bezug auf ein Bild des tatsächlich vorhandenen Exemplars oder lagerichtig in Bezug auf das im Sichtfeld des Betrachters (d.h. zum Beispiel des Nutzers) liegende Exemplar des Werkstücks dargestellt werden. Unter einer lagerichtigen Darstellung wird verstanden, dass die Informationen an Orten einer Bild-Darstellungseinrichtung dargestellt werden, an denen der Betrachter jeweils auch den den gemessenen Koordinaten entsprechenden Ort des Exemplars sieht. Z.B. wird bei einer Falschfarbendarstellung ein Oberflächenbereich des tatsächlich vorhandenen Exemplars des Werkstücks mit der jeweiligen Farbe eingefärbt. Dabei ist vorzugsweise außer der Farbe auch noch die reale Oberfläche des tatsächlich vorhandenen Exemplars für den Betrachter erkennbar.

Gemäß dem oben beschriebenen Vorschlag werden Koordinaten des Exemplars des Werkstücks, d.h. eines Istzustandes gemessen. Daraus können den Koordinaten zugeordnete Informationen über den Istzustand erzeugt werden. Dabei kann es sich lediglich um eine bestimmte Darstellung der Koordinaten handeln, z.B. ein bestimmtes Datenformat. Bevorzugt wird jedoch, dass bei der Erzeugung der den Koordinaten zugeordneten Informationen bereits eine Auswertung in Bezug auf den Sollzustand stattfindet. Z.B. kann für einen oder mehrere gemessene Koordinatensätze von Oberflächenpunkten des Werkstücks berechnet werden, wie weit der Oberflächenpunkt in Bezug auf einen Referenzpunkt des Werkstücks oder eines Koordinatensystems des Werkstücks oder in Bezug auf ein Referenzobjekt (wie z.B. eine andere Oberfläche des Werkstücks) vom Sollzustand entfernt ist. Z.B. kann sich ergeben, dass ein Oberflächenpunkt um einen bestimmten Entfernungsbetrag und in einer bestimmten Richtung von der Position eines entsprechenden Punktes gemäß Sollzustand des Werkstücks entfernt liegt. Die Entfernung und optional auch die Richtung können z. B. durch eine Falschfarbendarstellung (s. o.) dargestellt werden. Andere Möglichkeiten der Beschreibung von Messergebnissen aus Koordinatenmessungen von Werkstücken als die Entfernung sind dem Fachmann geläufig und können ebenfalls angewendet werden. Allgemein können zum Beispiel Form-, Maß- und/oder Positionsabweichungen als Messergebnisse bestimmt und optional nach der Auswahl durch eine Geste des Nutzers auch lagerichtig dargestellt werden.

Durch die Auswahl des Messergebnisses mittels der Geste und die optionale lagerichtige Darstellung der Informationen über den Istzustand in Bezug auf das Exemplar des Werkstücks, das dem Istzustand oder einem Sollzustand (z. B. einem CAD-Modell) entspricht, wird es dem Betrachter wesentlich erleichtert, die Informationen dem realen, tatsächlich vorhandenen Exemplar und seinen Bereichen (insbesondere seinen Oberflächenbereichen) zuzuordnen. Dies erleichtert z.B. die Erkennung von Ursachen für eine fehlerhafte Herstellung eines Exemplars des Werkstücks.

Das reale Exemplar des Werkstücks kann während der Ausführung der Geste tatsächlich im Blickfeld des Betrachters liegen. Es ist aber auch möglich, dass das Werkstück z.B. neben dem Blickfeld des Betrachters liegt und für die Auswahl des zumindest einen des Ergebnisses von einer Bilderzeugungseinrichtung ein Bild erzeugt wird, welches auf einem Bildschirm dargestellt wird. Wenn das Exemplar im Blickfeld liegt, kann es hinter der Darstellungseinrichtung liegen und entweder von dieser verdeckt werden oder das Exemplar kann durch die Darstellungseinrichtung hindurch betrachtet werden. In jedem Fall ermöglicht es das Vorhandensein des Exemplars, dass der Betrachter das Werkstück auch unabhängig von der Bild-Darstellungseinrichtung betrachten kann. Z.B. kann der Betrachter ein kleines Exemplar des Werkstücks in die Hand nehmen und mit Hilfe einer Lupe genauer betrachten. Bei größeren Werkstücken kann der Betrachter z.B. um das Exemplar herumlaufen oder näher an das Exemplar herantreten.

Besonders vorteilhaft sind z.B. die beiden im Folgenden beschriebenen Ausgestaltungen:
Bei der ersten Ausgestaltung ist das tatsächlich vorhandene Exemplar von der Betrachtungsposition aus gesehen hinter der Bild-Darstellungseinrichtung (d. h. insbesondere hinter dem Bildschirm) angeordnet und kann der Betrachter das Exemplar durch die Bild-Darstellungseinrichtung (insbesondere den Bildschirm) hindurch sehen. Entsprechende semitransparente Bildschirme, die für diesen Zweck verwendet werden können, sind an sich bekannt.

Bei der anderen Ausgestaltung ist die Bild-Darstellungseinrichtung nicht semitransparent und wird ein Bild des tatsächlich vorhandenen Werkstücks auf einem Bildschirm dargestellt. Diese Ausführungsform hat den Vorteil, dass sowohl die Darstellung des Exemplars als auch die Darstellung der Messergebnisse z.B. bezüglich Helligkeit, Kontrast und/oder Farbintensität der Darstellung oder in anderer Weise verändert werden kann, so dass z.B. die Oberfläche des tatsächlich vorhandenen Exemplars besser sichtbar wird oder die Informationen über den Istzustand deutlicher erkennbar werden. Bei der Ausgestaltung mit dem semitransparenten Bildschirm dagegen ist die Intensität des durch den Bildschirm hindurchtretenden Lichts, welches von der Oberfläche des tatsächlich vorhandenen Exemplars ausgeht, nach oben begrenzt. Der semitransparente Bildschirm reflektiert und absorbiert einen Teil dieses Lichts.

Insbesondere im Fall der Ausgestaltung mit dem nicht semitransparenten Bildschirm kommen auch tragbare Computer wie so genannte Hand-Held-Computer (z.B. Mobiltelefone mit großem Display und entsprechender Rechenkapazität, wie sie heutzutage im Handel erhältlich sind), Organisern, PDAs (Personal Digital Assistants) und TabletPC), aber auch Notebook-Computer (z. B. mit aufklappbaren Flachbildschirmen mit Bildschirm-Diagonalen typischerweise größer als 8 Zoll) für die vorliegende Erfindung in Frage. Die Bildschirme oder Displays dieser Computer können als Bild-Darstellungseinrichtung verwendet werden. Bei modernen Mobiltelefonen oder Hand-Held-Computern sind vielfach auf der dem Bildschirm gegenüberliegenden Seite angeordnete Kameraobjektive vorhanden, die für die Erzeugung des Bilds des tatsächlich vorhandenen Werkstück-Exemplars verwendet werden können. Bei Notebook-Computern könnte z.B. das Exemplar auf der Rückseite des aufgeklappten Bildschirm-Teils des Computers angeordnet werden und an diesem Teil zusätzlich eine Kamera angebracht werden, die das Bild von dem Werkstück aufnimmt.

Vorzugsweise wird eine Position und Ausrichtung des vorhandenen Exemplars des Werkstücks automatisch erfasst und werden außerdem optional abhängig von der Auswahl zumindest eines Messergebnisses das oder die Messergebnisse lagerichtig dargestellt. Alternativ oder zusätzlich wird eine Bewegung des Exemplars während der Darstellung der ausgewählten Messergebnisse auf der Bild-Darstellungseinrichtung verfolgt und wird die Darstellung der Messergebnisse laufend, entsprechend der Verfolgung der Bewegung angepasst, so dass die Informationen permanent lagerichtig dargestellt werden. Da das Ergebnis der Verfolgung der Bewegung des Exemplars zunächst datentechnisch verarbeitet wird, um die lagerichtige Darstellung der Informationen zu ermöglichen, kann die lagerichtige Darstellung mit einer kurzen Zeitverzögerung erfolgen. Mit leistungsfähigen Mikroprozessoren ist diese kurze Zeitverzögerung jedoch für den Betrachter kaum wahrnehmbar.

Sowohl zur Erfassung der Position und Ausrichtung des Werkstück-Exemplars als auch zur Verfolgung der Bewegung können so genannte Tracking-Systeme eingesetzt werden. Alle bekannten Prinzipien des Tracking (d.h. der Verfolgung) können dabei zum Einsatz kommen. Z. B. kann es sich bei dem Tracking-System um ein System handeln, das auf dem magnetischen Prinzip basiert. Hierzu wird zumindest eine in der Regel sehr klein dimensionierte, von Strom durchflossene Spule (oder eine Anrodung mit einer Mehrzahl von Spulen) in einem äußeren Magnetfeld verfolgt. Die Spule ist mit dem Exemplar des Werkstücks mechanisch verbunden, so dass auch die Position, Ausrichtung und Bewegung des Exemplars erfasst werden kann. Solche Tracking-Systeme werden z. B. von der Ascension-Technology-Corporation, Burlington, VT 05402, USA hergestellt.

Alternativ oder zusätzlich kann eine Position und/oder Blickrichtung des Nutzers automatisch erfasst werden und bei der Auswahl des zumindest einen Messergebnisses der Bestimmung von Koordinaten berücksichtigt werden. Optional kann außerdem abhängig von einem Ergebnis der Erfassung der Position und/oder Blickrichtung des Nutzers das Messergebnis lagerichtig auf einer Bild-Darstellungseinrichtung dargestellt werden. Wiederum kann zur Bestimmung der Position und/oder Blickrichtung ein Tracking-System eingesetzt werden. Beispielsweise wird der Tracking-Sensor (z. B. die oben erwähnte Spule oder Anordnung von mehreren Spulen) am Kopf des Betrachters angebracht. Zur Anbringung eignet sich z. B. eine Brille oder ein Bügel, der am Ohr des Betrachters aufgehängt werden kann.

Generell kann die Erfindung auch mit einer Datenbrille als Bild-Darstellungseinrichtung realisiert werden. In diesem Fall kann der Tracking-Sensor, wie es bei Augmented Reality Geräten häufig der Fall ist, in der Datenbrille integriert sein oder mechanisch mit ihr verbunden sein. Ein anderer, in der Literatur verwendeter Begriff für Datenbrille ist Head Mounted Display. Dadurch kommt zum Ausdruck, dass die am Kopf des Betrachters angebrachte Einrichtung nicht die Form einer klassischen Brille haben muss. Auch muss das Display in diesem Fall nicht durchsichtig, d. h. semitransparent sein.

Ausführungsbeispiele der vorliegenden Erfindung werden nun unter Bezugnahme auf die beigefügte Zeichnung beschrieben. Die einzelnen Figuren der Zeichnung zeigen:
- Fig. 1:: schematisch eine Anordnung mit einem Exemplar eines Werkstücks, das von einem Betrachter durch einen semitransparenten Bildschirm hindurch betrachtet werden kann,
- Fig. 2:: eine Bildschirmdarstellung eines Werkstücks mit zwei Oberflächen-Bereichen, die mit unterschiedlichem Grad von einem Sollzustand abweichen, sowie mit einem weiteren Messergebnis,
- Fig. 3:: eine Alternative zu der Anordnung gemäß Fig. 1, wobei eine Ansicht eines Exemplars eines Werkstücks durch eine Kamera erfasst wird,
- Fig. 4:: schematisch eine Hand eines Nutzers in der Nähe eines Exemplars des Werkstücks, wobei die von der Hand ausgeführte Geste von einer Mehrzahl von Kameras erfasst wird, um zumindest ein der Geste entsprechendes Messergebnis auszuwählen,
- Fig. 5:: eine schematische Draufsicht von oben auf einen Teil einer Serienfertigungsanlage, wobei die Anlage auch eine Messstation zur Vermessung von Koordinaten der gefertigten Exemplare aufweist und wobei alternativ oder zusätzlich zu der Messstation eine Auswertungsstation vorhanden ist, an der vorzugsweise auf einem Bildschirm Messergebnisse der Vermessung eines Exemplars des Werkstücks dargestellt werden können, während der Betrachter des Bildschirms auch ein Exemplar des Werkstücks sieht,
- Fig. 6:: die Messstation der in Fig. 5 dargestellten Serienfertigungsanlage,
- Fig. 7:: eine Darstellung auf einem Bildschirm, das ein Messergebnis einer Bestimmung eines Konturverlaufs darstellt, wobei der Konturverlauf überhöht dargestellt ist, und
- Fig. 8a bis 8o:: eine Mehrzahl von vordefinierten Form- und/oder Lage-Symbolen, die durch eine Geste dargestellt werden können.

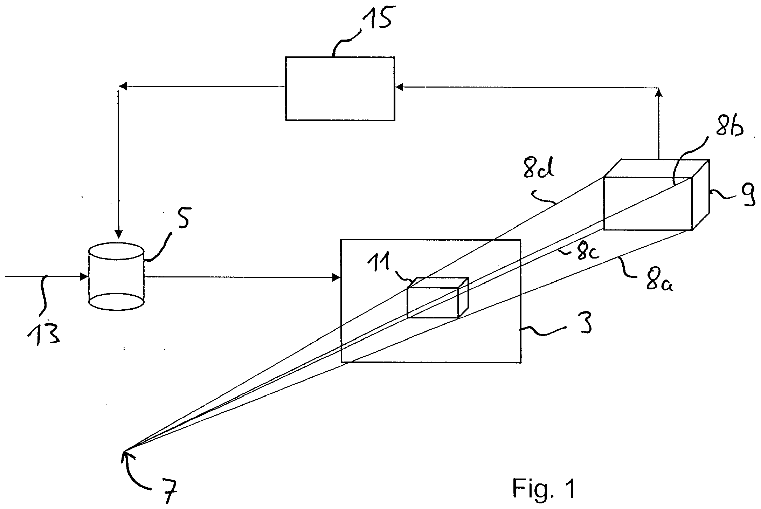

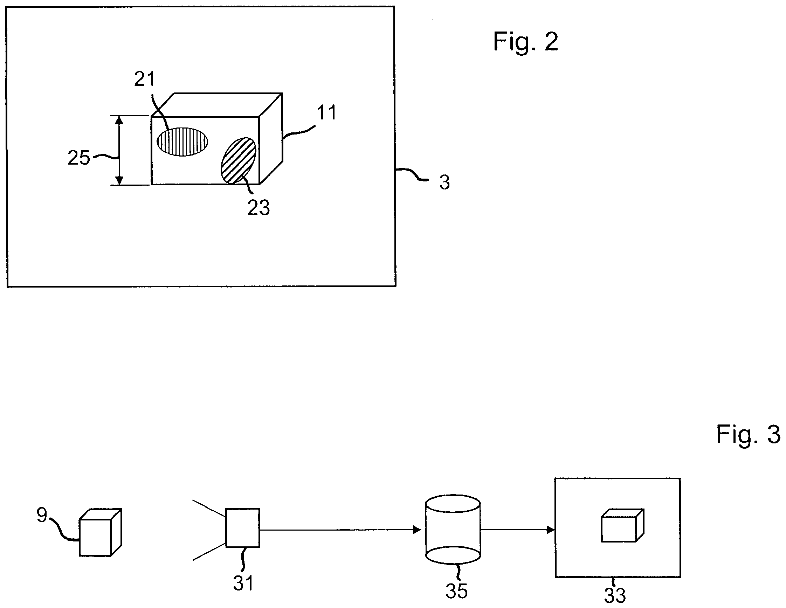

Fig. 1 zeigt schematisch einen semitransparenten Bildschirm 3, auf dem, gesteuert von einer Datenverarbeitungseinrichtung 5, Messergebnisse aus der Vermessung von Koordinaten eines Werkstücks darstellbar sind. Die Messergebnisse können z. B. in Falschfarbendarstellung und/oder als Abmessungen, wie in Fig. 2 gezeigt, dargestellt werden. Hierauf wird noch näher eingegangen.

Aus einer Betrachtungsposition 7 sieht ein Betrachter (nicht dargestellt in Fig. 1) durch den semitransparenten Bildschirm 3 hindurch ein Exemplar 9 des Werkstücks. In der Ebene des Bildschirms 3 erscheint das Exemplar 9 in einer Größe, die in Fig. 1 durch den Quader 11 dargestellt ist. Vier Linien 8a - 8d verdeutlichen, dass es sich bei dem scheinbar in der Bildebene des Bildschirms 3 liegenden Objekt 11 lediglich um ein Bild des tatsächlich vorhandenen Exemplars 9 handelt.

Bei einer alternativen Ausgestaltung der Anordnung kann es sich bei dem Objekt 11 um ein von der Bild-Darstellungseinrichtung durch entsprechende Ansteuerung des Bildschirms 3 erzeugtes Bildobjekt handeln. In diesem Fall ist z. B. auf der Rückseite des Bildschirms 3 eine Kamera angeordnet, die das Exemplar 9 abbildet.

Im Fall der in Fig. 1 dargestellten Anordnung jedoch werden von der Steuerung 5 des Bildschirms 3 lediglich die Messergebnisse auf dem Bildschirm 3 dargestellt, nicht jedoch das Werkstück. Nach der Auswahl zumindest eines Messergebnisse durch eine Geste des Betrachters oder eines anderen Nutzers ist die Darstellung des zumindest einen Messergebnis lagerichtig, d. h. an Orten auf der Bild-Darstellungseinrichtung, an denen der Betrachter einen bestimmten Bereich des Exemplars 9 sieht, werden auch die zugehörigen Mess-Informationen, die dem Bereich des Objekts zugeordnet sind, dargestellt. "Zugeordnet" ist so zu verstehen, dass dieser Bereich des Exemplars oder eines anderen Exemplars des Werkstücks vermessen wurde und daraus Informationen über den durch die Messung erhaltenen Istzustand erhalten wurden. Im Allgemeinen werden hierzu die Koordinaten dieses Bereichs des Werkstücks gemessen und daraus die Informationen über den Istzustand, d. h. die Messergebnisse, des Bereichs gewonnen. Optional können Messergebnisse auch bereits vor der Auswahl lagerichtig dargestellt werden. Jedoch handelt es sich dabei häufig um zu viele Messergebnisse, sodass der Nutzer bestimmte Messergebnisse, die momentan Gegenstand seines Interesses sind, nicht oder nur mit Einschränkungen dem Exemplar des Werkstücks und/oder bestimmten Bereichen des Exemplars zuordnen kann.

Die Messergebnisse werden der Datenverarbeitungseinrichtung 5, die auch die Steuerung des Bildschirms 3 aufweist, über die durch einen Pfeil links in Fig. 1 angedeutete Schnittstelle zugeführt. Dies kann während der Darstellung der Messergebnisse auf dem Bildschirm 3 geschehen. In vielen Fällen scheint es jedoch vorteilhaft zu sein, da Koordinatenmessungen einige Zeit in Anspruch nehmen, die Vermessung des Werkstücks vorher vorzunehmen. Bei dem Werkstück muss es sich nicht um dasselbe Exemplar handeln, das vorhanden ist und von dem Nutzer direkt oder indirekt betrachtet werden kann.

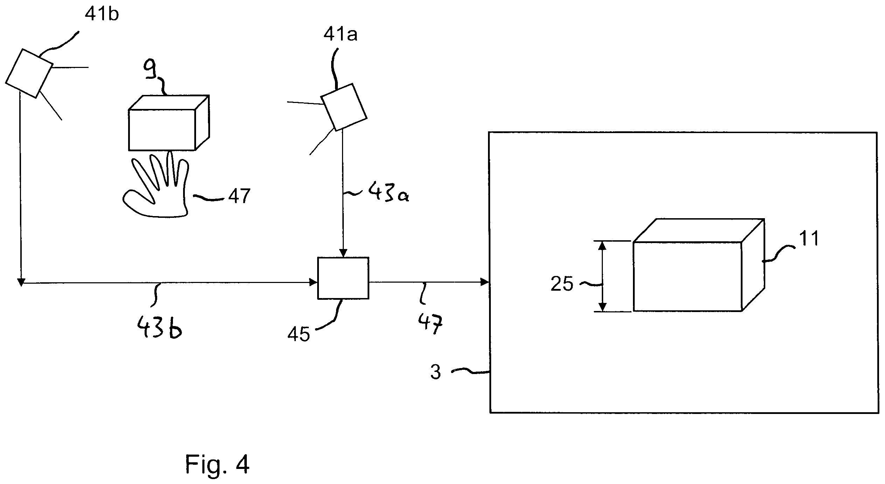

In Fig. 1 ist außerdem ein Tracking-System 15 dargestellt (schematisch durch ein Rechteck im oberen Figurenteil), das fortlaufend die Position und Ausrichtung des Exemplars 9 erfasst. Diese Erfassung ist durch die im oberen rechten Figurenteil gezeigten Pfeile angedeutet. Insbesondere ist es auch möglich, dass dasselbe Tracking-System sowohl die Position und Ausrichtung des Exemplars 9 erfasst, als auch die Geste des Nutzers. Eine solche Ausgestaltung wird noch unter Bezugnahme auf Fig. 4 beschrieben. Derartige Tracking-Systeme verwenden vorzugsweise zumindest eine Kamera zur Erfassung von Bildern des Exemplars und der Geste.

Entsprechend der Position und Ausrichtung des Exemplars erzeugt das Tracking-System 15 Signale, die der Datenverarbeitung 5 zugeführt werden. Dies ist durch zwei Pfeile im linken oberen Figurenteil dargestellt. Die Datenverarbeitung 5 erzeugt daraus die Information, die sie für die lagerichtige Darstellung der Messergebnisse auf dem Bildschirm 3 benötigt.

Insbesondere werden das Koordinatensystem, auf das sich das Tracking-System bei der Bestimmung der Position und Ausrichtung des Exemplars 9 bezieht, und das Koordinatensystem der Bildinhalte für die Darstellung auf dem Bildschirm 3 vor oder zu Beginn der Darstellung registriert, d. h. die Koordinatensysteme werden so miteinander in Beziehung gebracht, dass die lagerichtige Darstellung der Messergebnisse möglich ist. Die Registrierung kann z. B. interaktiv erfolgen, indem die Datenverarbeitungseinrichtung 5 auf dem Bildschirm 3 an ausgewählten Positionen Bildinhalte darstellt (z. B. einen Pfeil) und der Benutzer mit einem speziellen Signalgeber, dessen Position durch das Tracking-System 15 erfasst werden kann, entsprechende, zuzuordnende Stellen an der Oberfläche des Exemplars 9 antastet und ein Signal an das Tracking-System 15 oder die Datenverarbeitungseinrichtung 5 ausgibt. Auf diese Weise kann das Tracking-System 15 oder die Datenverarbeitungseinrichtung 5 lernen, dass die momentan auf dem Bildschirm 3 angezeigte Position an einem bestimmten Ort an der Oberfläche des Exemplars 9 liegt. Wird diese Prozedur für zumindest drei Orte an der Oberfläche des Exemplars 9 durchgeführt, kann eine vollständige, interaktive Registrierung durchgeführt werden.

Es ist jedoch auch möglich, die Position und Ausrichtung des Exemplars 9 z. B. über eine automatische Erfassung von Bildern des Exemplars 9 und eine automatische Auswertung dieser Bilder vorzunehmen. Dabei werden z. B. charakteristische Orte der Oberfläche aus den Bildern erkannt und mit Hilfe eines Computermodells des Werkstücks (das auch den Sollzustand repräsentieren kann) den momentanen Positionen des realen Exemplars 9 zugeordnet.

Bei einem solchen Verfahren muss keine anfängliche Registrierung durchgeführt werden. Vielmehr kann auf diese Weise laufend die korrekte Position und Ausrichtung des Exemplars 9 ermittelt werden. Bevorzugt wird allerdings die anfängliche Registrierung, da eine Verfolgung der Bewegung des Exemplars 9 und die damit verbundene Änderung der Position und Ausrichtung des Ortes des Exemplars 9 mit geringerem Rechenaufwand und damit schneller erfasst werden kann. Insbesondere kann diese Verfolgung der Bewegung selbsttätig durch das Tracking-System durchgeführt werden. Es ist aber auch möglich, das Tracking-System in die Datenverarbeitungseinrichtung 5 zu integrieren.

Fig. 2 zeigt insbesondere für den Fall von Fig. 1, aber auch für andere Fälle schematisch einen ersten Bereich 21 und einen zweiten Bereich 23 in einer lagerichtigen Darstellung an der Oberfläche des zu betrachtenden Werkstücks. Das Werkstück ist in Fig. 2 wiederum schematisch durch einen Quader dargestellt, wobei es sich um ein aktiv durch die Bild-Darstellungseinrichtung auf dem Bildschirm dargestelltes Bild handelt und/oder um ein Bild, dass scheinbar in der Bildebene des Bildschirms 3 liegt, weil der Betrachter das Objekt durch den Bildschirm 3 hindurch direkt sehen kann. Außerdem ist in Fig. 2 durch einen Doppelpfeil angedeutet, dass auf dem Bildschirm 3 eine Abmessung des Quaders 11 dargestellt wird, nämlich der Abstand zwischen der oberen und der unteren etwa horizontal verlaufenden Oberfläche des Quaders 11. Bei dem Abstand kann sich z. B. um einen lokalen Abstand am linken Rand des Quaders 11 handeln oder um den mittleren Abstand der beiden genannten Oberflächen.

Wenn hier von einer Bildebene die Rede ist, so beschränkt dies die Erfindung nicht auf flächenartige Bild-Darstellungseinrichtungen mit einer einzigen Bildebene. Vielmehr kann es sich bei der Bild-Darstellungseinrichtung auch um eine Einrichtung zur Darstellung dreidimensionaler Bilder, z. B. mit Hilfe von stereoskopischen Verfahren handeln. Bei einem semitransparenten Bildschirm ist auch zu beachten, dass ein Betrachter mit zwei Augen das tatsächlich vorhandene Exemplar 9 im Fall der Fig. 1 aus zwei Beobachtungspositionen betrachtet, da die beiden Augen des Betrachters voneinander beabstandet sind und daher an zwei verschiedenen Orten positioniert sind. Vorzugsweise wird dies bei der lagerichtigen Darstellung berücksichtigt. Insbesondere bei einer stereoskopischen Darstellung kann für jedes Auge eine eigens auf das Auge abgestimmte Darstellung der Informationen über den Istzustand des Werkstücks vorgenommen werden. Dies schließt auch den Fall mit ein, dass für jedes Auge ein separater Bildschirm oder separater Bereich eines Bildschirms (wie beispielsweise eine semitransparente Datenbrille) eingesetzt wird.

Die in Fig. 2 dargestellten Bereiche 21, 23 an der Oberfläche des Werkstücks sind in der Darstellung der Fig. 2 in unterschiedlicher Weise schraffiert. In der Praxis kann statt der Schraffur z. B. jeder Bereich in einer unterschiedlichen Farbe dargestellt werden oder in unterschiedlichen Graustufen dargestellt werden. Jeder der Bereiche 21, 23 deutet auf einen der Farbe oder Graustufe (hier der Schraffur) zugeordneten Grad von Positionsabweichungen der Oberfläche des Werkstücks hin. Unter Abweichungen ist hier zu verstehen, dass der gemessene Istzustand von dem Sollzustand abweicht. Z. B. weicht der Oberflächenbereich, der dem Bereich 21 entspricht, um 0,1 bis 0,2 µm von der Sollposition ab und weicht der Oberflächenbereich, der durch den Bereich 23 markiert ist, um 0,2 bis 0,3 µm von der Sollposition der Oberfläche ab.

Außerdem ist, wie bereits erwähnt, eine Abmessung des Werkstücks auf dem Bildschirm 3 dargestellt. Bei der Darstellung gemäß Fig. 2 handelt es sich lediglich um ein vereinfachtes Beispiel. In der Praxis ist in der Regel eine Vielzahl von Messergebnissen aus der Koordinatenmessung eines Werkstücks vorhanden, die ohne Auswahl einzelner Messergebnisse zu einer unübersichtlichen Bildschirmdarstellung führt. Bei der Darstellung der Messergebnisse können anders als in Fig. 2 gezeigt auch Zahlen und Buchstaben verwendet werden sowie andere Symbole. Z.B. kann für die in Fig. 2 dargestellte Abmessung zusätzlich auch der Messwert, z.B. "23,753 mm", auf dem Bildschirm dargestellt werden.

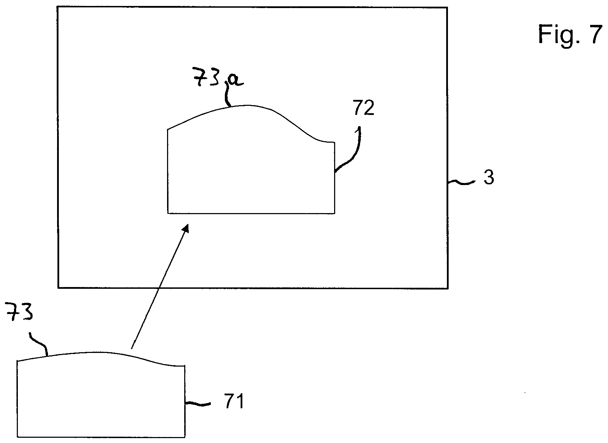

In Fig. 7 ist eine andere Art eines Messergebnisses dargestellt. Auf dem Bildschirm 3 ist die Kontur einer Oberfläche 73 eines Messobjekts 71 überhöht dargestellt. Dementsprechend variiert der Konturverlauf der auf dem Bildschirm 3 dargestellten Oberfläche 73a der überhöhten Darstellung 72 stärker und damit deutlicher erkennbar als der Konturverlauf der Oberfläche 73 des Messobjekts 71.

Die in Fig. 3 dargestellte Alternative einer Anordnung zur Darstellung von Messergebnissen zeigt links in der Figur das Exemplar 9 des Werkstücks. Es wird von einer Kamera 31 erfasst und die Kamera gibt entsprechende Bilddaten zu der Datenverarbeitungseinrichtung 35 aus, die der Datenverarbeitungseinrichtung 5 gemäß Fig. 1 entspricht.

Die Datenverarbeitungseinrichtung 35 steuert den Bildschirm 33 so an, dass sowohl das von der Kamera 31 aufgenommene Bild des Exemplars 9 dargestellt wird, als auch in vorzugsweise lagerichtiger Darstellung die Messergebnisse des Werkstücks. Die Darstellung kann beispielsweise wie in Fig. 2 gezeigt aussehen.

Ein Koordinatenmessgerät ist in den Figuren 1 bis 4 nicht näher dargestellt. Z. B. bezüglich der Anordnung in Fig. 1 könnte das Koordinatenmessgerät links in der Figur eingezeichnet werden, so dass der Pfeil mit der Schnittstelle 13 von dem Koordinatenmessgerät zu der Datenverarbeitungseinrichtung 5 führt.

Fig. 4 zeigt einen Ort, an dem sich ein Exemplar 9 eines Werkstücks befindet. An dem Ort kann ein Nutzer mit seiner Hand 47 Gesten ausführen, wobei sich die Hand 47 dabei in unmittelbarer Nähe zu dem Exemplar 9 befindet oder dieses sogar berührt. Unter unmittelbarer Nähe wird insbesondere ein Abstand von höchstens 5 cm, vorzugsweise höchstens 2 cm, verstanden. Das Unterschreiten eines derartigen Grenzwertes für den Abstand kann für die Gesten-Erkennungseinrichtung (dies gilt nicht nur für die hier beschriebene Ausführungsform) die Information bedeuten, dass eine Geste ausgeführt wird. In diesem Fall interpretiert die Gesten-Erkennungseinrichtung eine Aktion des Nutzers nur solange als Ausführung einer Geste, wie der Grenzwert unterschritten ist.

Im Ausführungsbeispiel befindet sich der Ort im Sichtfeld einer Mehrzahl von Kameras 41a, 41b. Anders als in Fig. 4 dargestellt können auch mehr als zwei Kameras auf den Ort gerichtet sein. Die Kameras 41 sind über Bildsignalleitungen 43 mit einer Erkennungseinrichtung 45 verbunden, die ausgestaltet ist, aus den empfangenen Kamerabildern eine von der Hand 47 ausgeführte Geste als eine von mehreren vordefinierten Gesten zu erkennen.

Optional ist die Erkennungseinrichtung 45 auch eine Einrichtung, die die Position, an der die Geste ausgeführt wird, erfasst. Insbesondere handelt es sich bei der Position um eine Relativposition zu dem Exemplar des Werkstücks. Daher kann die Erfassungseinrichtung ausgestaltet sein, nicht die absoluten Positionen des Werkstücks (das heißt Positionen im Laborsystem) und der Hand 47 zu erfassen, sondern unmittelbar die Relativposition (d. h. die Position im Koordinatensystems des Werkstücks) von Hand 47 und Exemplar 9 zu erfassen.

Außerdem kann die Erfassungseinrichtung ausgestaltet sein, die Ausrichtung der Hand 47 bei Ausführung der Geste zu erfassen. Die Ausrichtung kann bezogen auf den Ort, an dem sich das Exemplar 9 und die Hand 47 befinden, erfasst werden. Analog zu der Positionserfassung wird die Ausrichtung aber vorzugsweise relativ zu dem Exemplar 9 erfasst.

Ebenfalls in die Erkennungseinrichtung 45 integriert sein kann eine Auswahleinrichtung zum Auswählen eines Messergebnisses der Bestimmung von Koordinaten des Werkstücks abhängig von der erfassten Position und der erkannten Geste. Beispielsweise handelt es sich bei der Erkennungseinrichtung 45 um einen Computer, der die genannten Funktionen der Erkennung, Erfassung und/oder Auswahl gesteuert durch ein Computerprogramm ausführt.

Fig. 4 zeigt eine Steuerverbindung 47 von der Einrichtung 45 zu dem Bildschirm 3, über die Bildsignale von der Einrichtung 45 zu dem Bildschirm 3 übertragen werden. Im Fall eines handelsüblichen Computers weist die Einrichtung 45 z.B. eine Videokarte auf, die gesteuert von einem zentralen Prozessor der Einrichtung 45, die auf dem Bildschirm 3 darzustellenden Bilder in Form von Bildsignalen erzeugt und ausgibt.

Ausgehend von dem in Fig. 2 dargestellten Zustand des Bildschirms 3, in dem mehrere Messergebnisse dargestellt werden, findet z.B. an dem in Fig. 4 dargestellten Ort in der Nähe des Exemplars 9 die Ausführung einer Geste mittels der Hand 47 statt. Z.B. führt die Hand 47 anders als in Fig. 4 dargestellt mit lediglich einem ausgestreckten Finger, z.B. dem Zeigefinger, eine linienartige Bewegung der Fingerspitze des ausgestreckten Fingers entlang der vorne links von oben nach unten verlaufenden Eckkante des Exemplars 9 aus. Diese Geste wird von den Kameras 41 erfasst (d.h. es werden aufeinanderfolgende Bilder aufgenommen und zu der Einrichtung 45 übertragen). Die Einrichtung 45 erkennt die Relativposition der Fingerspitze des ausgestreckten Fingers in Bezug auf das Exemplar 9, d.h. erkennt, dass die von der Fingerspitze im Raum entlanggefahrene Linie parallel zu der genannten Eckkante und in unmittelbarer Nähe zu der genannten Eckkante verläuft. Aus der Linienbewegung der Fingerspitze ermittelt die Einrichtung 45, dass eine geradlinige Abmessung des Werkstücks als Messergebnis ausgewählt wurde. Aus der unmittelbaren Nähe der Linie zu der genannten Eckkante ermittelt die Einrichtung 45, dass die in Fig. 2 dargestellte Abmessung 25 ausgewählt wurde. Folglich wird lediglich diese Abmessung 25 auf dem Bildschirm 3 dargestellt und werden die anderen Messergebnisse ausgeblendet. Alternativ wird das ausgewählte Messergebnis hervorgehoben, z.B. durch eine besondere Farbe dargestellt oder es wird wiederholt ein- und ausgeblendet.

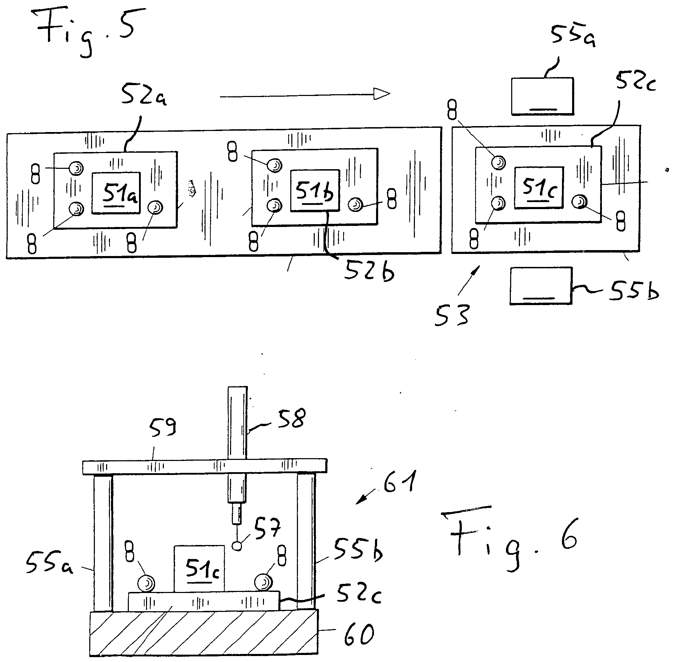

Fig. 5 zeigt einen Teil einer Fertigungsanlage. Wie der nach rechts weisende Pfeil andeutet, werden die Exemplare 51a, 51b, 51c, die im Fertigungsprozess hergestellt wurden, von links nach rechts transportiert. Im dargestellten Ausführungsbeispiel befinden sie sich dabei jeweils auf einem Transportmittel, wie beispielsweise einer Palette 52a, 52b, 52c. Die Paletten weisen jeweils drei Marker 8 auf, z.B. Kugeln, deren Relativposition zueinander bekannt ist. Auf diese Weise existiert ein Bezugs-Koordinatensystem.

Rechts in Fig. 5 ist eine Messstation 53 dargestellt, in der das auf der Palette 52c angeordnete Exemplar 51c vermessen wird. Fig. 6 zeigt die Messstation in einer Seitenansicht. Im Ausführungsbeispiel ist die Messstation mit einem Koordinatenmessgerät 61 in Portalbauweise ausgestattet. Zwischen den zwei Stützen 55a, 55b des Portals ist das Exemplar 51c auf der Palette 52c angeordnet. Eine Pinole 58 des Messgeräts 61 kann in horizontaler Richtung entlang einer Brücke 59, die die Stützen 55a, 55b verbindet, verfahren werden. Senkrecht zur Bildebene von Fig. 6 ist die Brücke 59 relativ zu den Stützen 55 verfahrbar. Ferner kann die am unteren Ende der Pinole 58 angeordnete Tastkugel 57 zum mechanischen Antasten des Exemplars 51c in vertikaler Richtung verfahren werden. Dadurch kann die Oberfläche des Exemplars 51c mechanisch von der Tastkugel 57 abgetastet werden. In an sich bekannter Weise werden daraus die Koordinaten der angetasteten Oberflächenpunkte ermittelt.

Ferner kann die Serienfertigungsanlage eine nicht in Fig. 5 dargestellte Messstation aufweisen, z.B. eine Messstation mit den in Fig. 4 dargestellten und oben beschriebenen Einrichtungen.

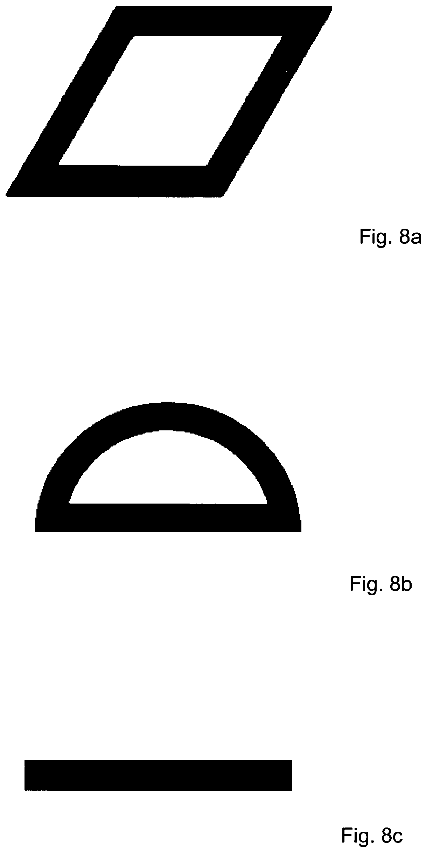

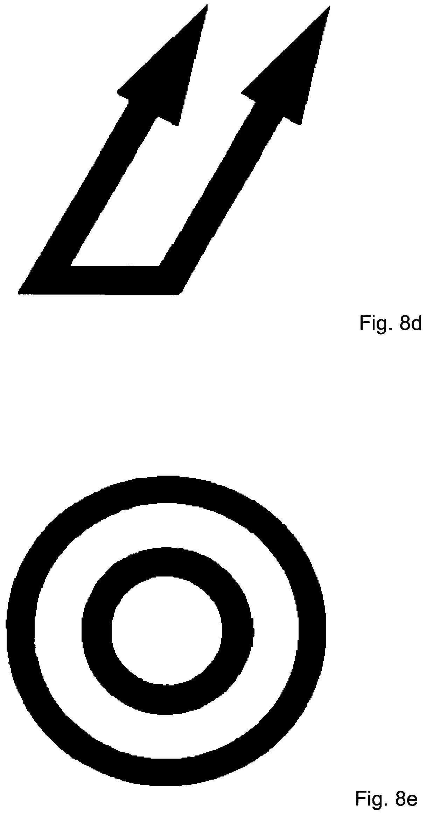

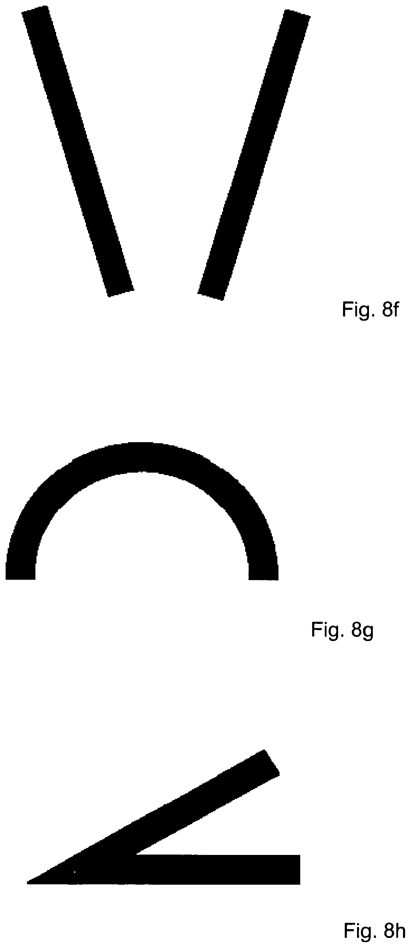

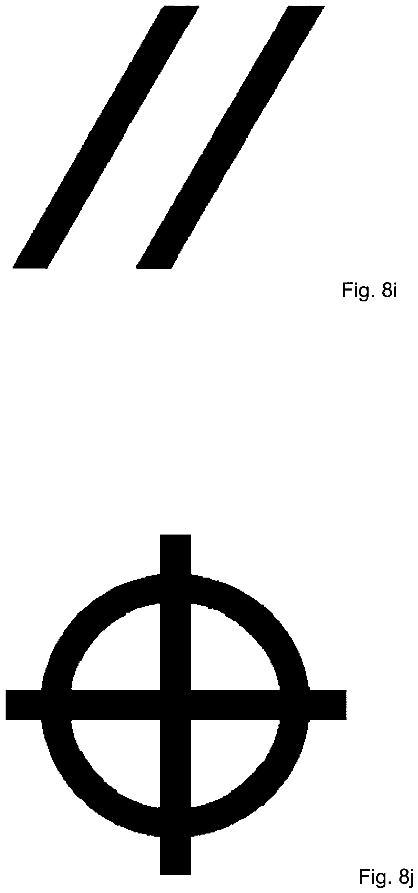

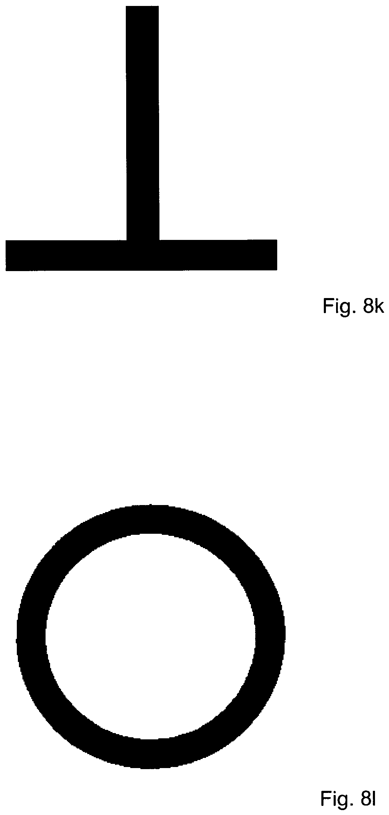

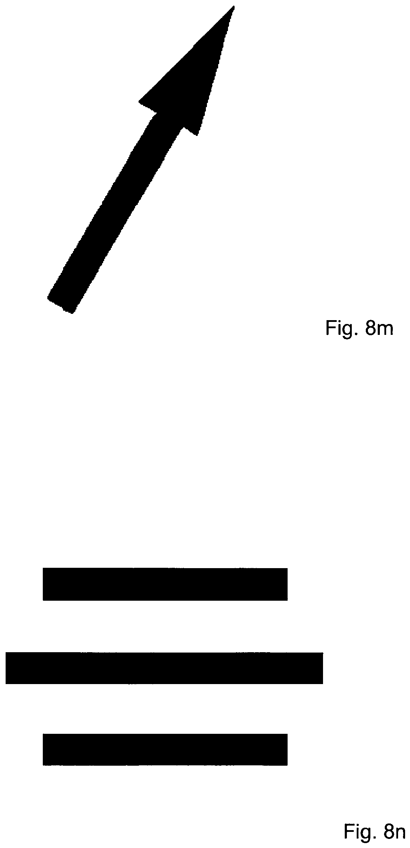

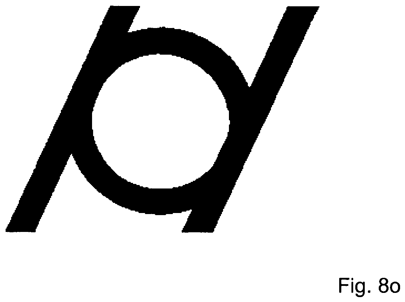

Fig. 8 zeigt eine Mehrzahl von Symbolen, die z.B. in der ISO-1101 als Form- und/oder Lage-Symbole definiert sind, um Messergebnisse aus der Vermessung von Koordinaten von Werkstücken zu definieren. Durch Ausführung einer Geste, die als eines dieser Symbole erkannt wird, kann der Nutzer daher das dem Symbol zugeordnete Messergebnis auswählen.

Im Folgenden werden nun die einzelnen Symbole kurz beschrieben. Für die Details zu den Messergebnissen, die dem jeweiligen Symbol zugeordnet sind, wird aber auf die ISO-1101 verwiesen.

Fig. 8a zeigt ein Parallelogramm. Diesem Symbol ist die Ebenheit einer Fläche des vermessenen Werkstücks zugeordnet. Fig. 8b zeigt einen Halbkreis mit Radiuslinie, d.h. die Umrisse eines Halbmondes. Dem ist das Messergebnis "Flächenprofil" zugeordnet, d.h. eine Fläche des vermessenen Werkstücks wird mit einer Sollgeometrie verglichen. Fig. 8c zeigt eine gerade, horizontal verlaufende Linie. Damit ist das Messergebnis "Geradheit" verbunden, d.h. es soll die Abweichung eines linienförmigen Bereichs oder Profils des vermessenen Werkstücks von einer geraden Linie als Messergebnis ausgewählt werden. Fig. 8d zeigt zwei parallele, von links unten nach rechts oben verlaufende Pfeile, deren untere Enden mit einem horizontalen geradlinigen Linienstück verbunden sind. Dem ist das Messergebnis "Gesamtlauftoleranz" oder "Rundlauftoleranz", je nach Zusammenhang zwischen Werkstück und Messung zugeordnet, d.h. einer Fläche des Werkstücks werden Messergebnisse einer Toleranz zu einem Sollzustand oder Idealzustand zugeordnet.

Bei der Darstellung von Pfeilen, wie bei dem Symbol in Fig. 8d, kann die Hand, mit der die Geste ausgeführt wird, z.B. eine vordefinierte Fingerstellung (z.B. Zeigefinger und Mittelfinger sind zu einem V gespreizt) haben, während die Hand eine dem Verlauf des Pfeils entsprechende linienförmige Bewegung ausführt. Dies betrifft den Fall, dass die Geste frei im Raum ausgeführt wird. Dass es sich bei der Linie, die der Bewegung der Hand entspricht, um einen Pfeil handelt, kann aber auch auf andere Weise zu erkennen gegeben werden. Z.B. kann die Hand wie oben erwähnt einen Gegenstand halten, der Betätigungsmittel (z.B. einen Signalknopf zum Erzeugen eines Signals) aufweist. Die Gesten-Erfassungseinrichtung kann dementsprechend so ausgestaltet sein, dass sie die Betätigung der Betätigungsmittel erkennt und abhängig davon erkennt, ob es sich bei dem Teil der Geste um einen Pfeil oder um eine Linie handelt.

Fig. 8e zeigt zwei konzentrische Kreise. Mit diesem Symbol ist das Messergebnis "Koaxialitätstoleranz" oder "Konzentrizitätstoleranz" verbunden. Dementsprechend kann das Messergebnis je nach Zusammenhang bezeichnen, ob koaxiale oder konzentrische Elemente betroffen sind. Fig. 8f zeigt zwei gleichlange, sich von oben nach unten erstreckende und einen sich dabei verjüngenden Zwischenraum einschließende Linien. Dieses Symbol steht für das Messergebnis "Konizität". Dementsprechend werden Messergebnisse dargestellt, die erkennen lassen, inwieweit das Werkstück oder ein Bereich des Werkstücks von einer zylindrischen Form oder einer vorgegebenen konischen Form abweicht.

Fig. 8g zeigt einen unten offenen Halbkreis. Damit ist das Messergebnis "Linienprofiltoleranz" verknüpft. Als Messergebnis werden Abweichungen zwischen einer Profillinie des Werkstücks und einer Solllinie oder Ideallinie, die vorgegeben ist, ausgewählt. Fig. 8h zeigt zwei Schenkel eines spitzen Winkels. Dem ist das Messergebnis "Neigung" zugeordnet. Alternativ oder je nach Zusammenhang zwischen Messung und Werkstück kann auch das Messergebnis "Winkel" zugeordnet sein. Die Neigung wird in der Dimension einer Länge angegeben, der Winkel üblicherweise in Grad. Fig. 8i zeigt zwei von links unten nach rechts oben verlaufende gleichlange parallele Linien. Dem ist das Messergebnis "Parallelität" zugeordnet, d.h. es kann als Messergebnis ausgewählt werden, inwieweit verschiedene linienförmige oder flächige Bereiche des Werkstücks von einem parallelen Verlauf abweichen. Fig. 8j zeigt einen Kreis mit einem Fadenkreuz. Dem ist das Messergebnis "Positionstoleranz" zugeordnet, d.h. die Abweichung einer zugeordneten Position des Werkstücks von einer Soll- oder Idealposition. Fig. 8k zeigt zwei Schenkel eines rechten Winkels, d.h. ein vertikaler Schenkel erstreckt sich in der Mitte eines horizontal verlaufenden Schenkels senkrecht nach oben. Damit ist das Messergebnis "Rechtwinkligkeit" verbunden, d.h. es wird die Abweichung von quer zueinander verlaufenden linienförmigen oder flächigen Bereichen des Werkstücks angegeben. Fig. 8l zeigt einen Kreis als Symbol, dem das Messergebnis "Rundheitstoleranz" zugeordnet ist, d.h. die Abweichung eines Bereichs des Werkstücks von einer Kreisform. Fig. 8m zeigt einen von links unten nach rechts oben verlaufenden einzelnen Pfeil. Damit ist das Messergebnis "Rundlauftoleranz" oder "Planlauftoleranz" verknüpft. Im Gegensatz zu dem Symbol gemäß Fig. 8d ist das dem Symbol gemäß Fig. 8m zugeordnete Messergebnis auf eine Linie des vermessenen Werkstücks bezogen und nicht auf eine Fläche. Fig. 8n zeigt drei horizontal verlaufende Linien, die übereinander positioniert sind, wobei die mittlere Linie etwas länger ist als die untere und obere Linie. Dieses Symbol steht für das Messergebnis "Symmetrie". Dementsprechend können Messergebnisse ausgewählt werden, die ausdrücken, ob und wie Bereiche des Werkstücks von einer idealen symmetrischen Konfiguration abweichen. Die Fig. 8o zeigt zwei von links unten nach rechts oben verlaufende parallele, gleichlange Linien, zwischen denen ein Kreis angeordnet ist, der an gegenüberliegenden Seiten jeweils von der Linie in der Art einer Tangente berührt wird. Damit ist das Messergebnis "Zylindrizität" verbunden, d.h. es kann als Messergebnis ausgewählt werden, in welchem Maß ein Bereich des vermessenen Werkstücks von einer zylindrischen Form abweicht.

## Patentansprüche

1. Verfahren zum Darstellen von Ergebnissen einer Vermessung eines Werkstücks, wobei
a1) eine Geste eines Nutzers, die eine Bewegung ist, die von einer Hand (47) oder von beiden Händen des Nutzers an einem vorhandenen Exemplar (9) des Werkstücks ausgeführt wird, erfasst wird, oder
a2) eine Geste eines Nutzers, die eine Bewegung ist, die von einer Hand (47) oder von beiden Händen des Nutzers an einem Bild (11) eines vorhandenen Exemplars (9) des Werkstücks ausgeführt wird, erfasst wird,
b) die erfasste Geste automatisch als eine vordefinierte Geste erkannt wird, die ein Symbol darstellt, und
c) abhängig von der erkannten Geste automatisch ein der Geste zugeordnetes Messergebnis der Vermessung eines Werkstücks ausgewählt und dargestellt wird.

2. Verfahren nach dem vorhergehenden Anspruch, wobei das Symbol ein Form- und/oder Lage-Symbol ist, das definiert, welche Art der Auswertung von gemessenen Koordinaten des Werkstücks oder eines Bereichs des Werkstücks als Messergebnis bereitzustellen ist, und wobei die Geste als das Symbol erkannt wird.

3. Verfahren nach einem der vorhergehenden Ansprüche, wobei bei der Erfassung der Geste zumindest eine Position, an der die Geste ausgeführt wird, erfasst wird und abhängig von der erkannten Geste und der erfassten Position der Geste ein Messergebnis der Vermessung eines Werkstücks ausgewählt und dargestellt wird.

4. Verfahren nach dem vorhergehenden Anspruch, wobei im Fall der Erfassung der Geste gemäß Schritt a1) in Anspruch 1 eine Position und Ausrichtung des Exemplars (9) des Werkstücks automatisch erfasst wird und wobei das Messergebnis abhängig von einem Ergebnis der Erfassung der Position und Ausrichtung des Exemplars (9) und abhängig von der erfassten Position der Geste ausgewählt wird.

5. Verfahren nach einem der vorhergehenden Ansprüche, wobei außerdem eine Ausrichtung der Geste erfasst und das Messergebnis auch abhängig von der Ausrichtung der Geste ausgewählt wird.

6. Verfahren nach einem der vorhergehenden Ansprüche, wobei sich das Exemplar (9) des Werkstücks von einer Betrachtungsposition des Nutzers aus gesehen hinter einer Bild-Darstellungseinrichtung (3) befindet und wobei der Nutzer die Geste an der Bild-Darstellungseinrichtung (3) ausführt.

7. Verfahren nach einem der vorhergehenden Ansprüche, wobei eine Position und/oder Blickrichtung des Nutzers automatisch erfasst wird und bei der Auswahl des Messergebnisses berücksichtigt wird.

8. Verfahren nach einem der vorhergehenden Ansprüche, wobei das ausgewählte Messergebnis lagerichtig in Bezug auf ein Bild des vorhandenen Exemplars (9) oder lagerichtig in Bezug auf das im Sichtfeld des Nutzers angeordnete Exemplar (9) des Werkstücks dargestellt wird, d.h. das zumindest eine Messergebnis wird insbesondere an einem Ort oder Orten einer Bild-Darstellungseinrichtung dargestellt, an dem/denen der Nutzer jeweils auch einen gemessenen Koordinaten, aus denen das Messergebnis ermittelt wurde, entsprechenden Ort des Exemplars (9) sieht.

9. Anordnung zum Darstellen von Ergebnissen einer Vermessung eines Werkstücks, wobei die Anordnung Folgendes aufweist:
i. eine Schnittstelle (13) zum Empfangen der Ergebnisse und/oder einen Speicher zum Speichern der Ergebnisse,
ii. eine Gesten-Erfassungseinrichtung (41a, 41b) zum Erfassen einer Geste eines Nutzers, die eine Bewegung ist, die von einer Hand (47) oder von beiden Händen des Nutzers
- an einem vorhandenen Exemplar (9) des Werkstücks oder
- an einem Bild (11) eines vorhandenen Exemplars (9) des Werkstücks ausgeführt wird,
iii. eine Erkennungseinrichtung (45) zum Erkennen der Geste als eine vordefinierte Geste, die ein Symbol darstellt,
iv. eine Auswahleinrichtung (45) zum Auswählen eines Messergebnisses abhängig von der erkannten Geste.

10. Anordnung nach dem vorhergehenden Anspruch, wobei das Symbol ein Form- und/oder Lage-Symbol ist, das definiert, welche Art der Auswertung von gemessenen Koordinaten des Werkstücks oder eines Bereichs des Werkstücks als Messergebnis bereitzustellen ist, und wobei die Erkennungseinrichtung (45) ausgestaltet ist, die Geste als das Symbol zu erkennen.

11. Anordnung nach einem der vorhergehenden Ansprüche, wobei die Anordnung eine Positions-Erfassungseinrichtung (45) zum Erfassen einer Position aufweist, an der die Geste ausgeführt wird.

12. Anordnung nach dem vorhergehenden Anspruch, wobei die Anordnung eine Bestimmungseinrichtung (45) zum Bestimmen einer Position und Ausrichtung des Exemplars (9) des Werkstücks aufweist, die im Fall der Ausführung der Geste am vorhandenen Exemplar (9) des Werkstücks die Position und Ausrichtung des Exemplars (9) automatisch bestimmt, und wobei die Auswahleinrichtung (45) ausgestaltet ist, das Messergebnis abhängig von einem Ergebnis der Bestimmung der Position und Ausrichtung des Exemplars (9) und abhängig von der erfassten Position der Geste auszuwählen.

13. Anordnung nach einem der vorhergehenden Ansprüche, wobei die Anordnung außerdem eine Ausrichtungs-Erfassungseinrichtung (45) zum Erfassen einer Ausrichtung der Geste aufweist und wobei die Auswahleinrichtung (45) ausgestaltet ist, das Messergebnis auch abhängig von der erfassten Ausrichtung der Geste auszuwählen.

14. Anordnung nach einem der vorhergehenden Ansprüche, wobei sich das Exemplar (9) des Werkstücks von einer Betrachtungsposition (7) des Nutzers aus gesehen hinter einer Bild-Darstellungseinrichtung (3) befindet und wobei der Nutzer die Geste an der Bild-Darstellungseinrichtung (3) ausführt.

15. Anordnung nach einem der vorhergehenden Ansprüche, wobei die Anordnung eine Erfassungseinrichtung zur Erfassung einer Position und/oder Blickrichtung des Nutzers aufweist und wobei die Auswahleinrichtung (45) ausgestaltet ist, bei der Auswahl des Messergebnisses die Position und/oder Blickrichtung des Nutzers zu berücksichtigen.

## Claims

1. Method for displaying results of a measurement of a workpiece, in which
a1) a gesture of a user that is a movement which is executed by a hand (47) or by both hands of the user on an existing example (9) of the workpiece, is detected, or
a2) a gesture of a user that is a movement which is executed by a hand (47) or by both hands of the user on an image (11) of an existing example (9) of the workpiece, is detected,
b) the detected gesture is automatically identified as a predefined gesture that represents a symbol, and
c) a measurement result of the measurement of a workpiece that is assigned to the gesture is automatically selected as a function of the identified gesture and displayed.

2. Method according to the preceding claim, in which the symbol is a shape and/or position symbol that defines which type of evaluation of measured coordinates of the workpiece or of an area of the workpiece is to be provided as measurement result, and in which the gesture is identified as the symbol.

3. Method according to one of the preceding claims, in which in the detection of the gesture at least one position at which the gesture is executed is detected, and a measurement result of the measurement of a workpiece is selected as a function of the identified gesture and the detected position of the gesture, and displayed.

4. Method according to the preceding claim, in which in the case of the detection of the gesture in accordance with step a1) in claim 1, a position and alignment of the example (9) of the workpiece is automatically detected, and in which the measurement result is selected as a function of a result of the detection of the position and alignment of the example (9) and as a function of the detected position of the gesture.

5. Method according to one of the preceding claims, in which, in addition, an alignment of the gesture is detected and the measurement result is also selected as a function of the alignment of the gesture.

6. Method according to one of the preceding claims, in which the example (9) of the workpiece is located behind an image display device (3) when seen from a viewing position of the user, and in which the user executes the gesture on the image display device (3).

7. Method according to one of the preceding claims, in which a position and/or viewing direction of the user is automatically detected, and in which the selection of the measurement result is taken into account.

8. Method according to one of the preceding claims, in which the selected measurement result is displayed in the correct position with reference to an image of the existing example (9), or in the correct position with reference to the example (9) of the workpiece, which is arranged in the field of view of the user, that is to say the at least one measurement result is displayed, in particular, at a location or locations of an image display device at which the user respectively also sees a location of the example (9) that corresponds to measured coordinates from which the measurement result was determined.

9. Arrangement for displaying results of a measurement of a workpiece, in which the arrangement has the following:
i. an interface (13) for receiving the results and/or a memory for storing the results,
ii. a gesture detection device (41a, 41b) for detecting a gesture of a user that is a movement which is executed by a hand (47) or by both hands of the user
- on an existing example (9) of the workpiece, or
- on an image (11) of an existing example (9) of the workpiece,
iii. an identification device (45) for identifying the gesture as a predefined gesture that represents a symbol, and
iv. a selection device (45) for selecting a measurement result as a function of the identified gesture.

10. Arrangement according to the preceding claim, in which the symbol is a shape and/or position symbol that defines which type of evaluation of measured coordinates of the workpiece or of an area of the workpiece is to be provided as measurement result, and in which the identification device (45) is configured to identify the gesture as the symbol.

11. Arrangement according to one of the preceding claims, in which the arrangement has a position detection device (45) for detecting a position at which the gesture is executed.

12. Arrangement according to the preceding claim, in which the arrangement has a determination device (45) for determining a position and alignment of the example (9) of the workpiece and which automatically determines the position and alignment of the example (9) in the case of the execution of the gesture on the existing example (9) of the workpiece, and in which the selection device (45) is configured to select the measurement result as a function of a result of the determination of the position and alignment of the example (9) and as a function of the detected position of the gesture.

13. Arrangement according to one of the preceding claims, in which, in addition, the arrangement has an alignment detection device (45) for detecting an alignment of the gesture, and in which the selection device (45) is configured also to select the measurement result as a function of the detected alignment of the gesture.

14. Arrangement according to one of the preceding claims, in which the example (9) of the workpiece is located behind an image display device (3) when seen from a viewing position (7) of the user, and in which the user executes the gesture on the image display device (3).

15. Arrangement according to one of the preceding claims, in which the arrangement has a detection device for detecting a position and/or viewing direction of the user, and in which the selection device (45) is configured to take account of the position and/or viewing direction of the user during selection of the measurement result.

## Revendications

1. Procédé de représentation des résultats d'une mesure d'une pièce, dans lequel
a1) un geste d'un utilisateur, qui est un mouvement exécuté par une main (47) ou par les deux mains de l'utilisateur sur un exemplaire (9) présent de la pièce, est détecté, ou
a2) un geste d'un utilisateur, qui est un mouvement exécuté par une main (47) ou par les deux mains de l'utilisateur sur une image (11) d'un exemplaire (9) présent de la pièce, est détecté,
b) le geste détecté est automatiquement reconnu comme étant un geste prédéfini qui représente un symbole, et
c) un résultat de mesure associé au geste pour la mesure d'une pièce est automatiquement sélectionné et représenté en fonction du geste reconnu.

2. Procédé selon la revendication précédente, dans lequel le symbole est un symbole de forme et/ou un symbole de position qui définit le type d'évaluation fourni en tant que résultat de mesure pour des coordonnées mesurées de la pièce ou une région de la pièce, et dans lequel le geste est reconnu comme étant que symbole.

3. Procédé selon l'une des revendications précédentes, dans lequel la détection du geste détecte au moins une position à laquelle le geste est exécuté et un résultat de mesure pour la mesure d'une pièce est sélectionné et représenté en fonction du geste reconnu et de la position détectée du geste.

4. Procédé selon la revendication précédente, dans lequel, dans le cas où le geste est détecté conformément à l'étape a1) de la revendication 1, une position et une orientation de l'exemplaire (9) de la pièce sont automatiquement détectées et dans lequel le résultat de mesure est sélectionné en fonction d'un résultat de détection de la position et de l'orientation de l'exemplaire (9) et en fonction de la position détectée du geste.

5. Procédé selon l'une des revendications précédentes, dans lequel une orientation du geste est en outre détectée et le résultat de mesure est également sélectionné en fonction de l'orientation du geste.

6. Procédé selon l'une des revendications précédentes, dans lequel l'exemplaire (9) de la pièce se situe à l'arrière d'un dispositif d'affichage d'image (3) tel qu'il est vu depuis une position d'observation de l'utilisateur et dans lequel l'utilisateur exécute le geste sur le dispositif d'affichage d'image (3).

7. Procédé selon l'une des revendications précédentes, dans lequel une position et/ou une direction de visée de l'utilisateur est/sont automatiquement détectée(s) et est/sont prise(s) en compte lors de la sélection du résultat de mesure.

8. Procédé selon l'une des revendications précédentes, dans lequel le résultat de mesure sélectionné est représenté en position exacte par rapport à une image de l'exemplaire (9) présent ou à une position exacte par rapport à l'exemplaire (9) disposé dans le champ de vision de l'utilisateur, c'est-à-dire qu'au moins un résultat de mesure est notamment représenté à un emplacement ou à des emplacements d'un dispositif d'affichage d'image auquel/auxquels l'utilisateur voit également respectivement un emplacement de l'exemplaire (9) correspondant à des coordonnées mesurées auxquelles le résultat de mesure a été obtenu.

9. Dispositif de représentation des résultats d'une mesure d'une pièce, dans lequel le dispositif comporte les éléments suivants :
i. une interface (13) destinée à recevoir les résultats et/ou une mémoire destinée à stocker les résultats,
ii. un dispositif de détection de geste (41a, 41b) destiné à détecter un geste d'un utilisateur qui est un mouvement exécuté par une main (47) ou par les deux mains de l'utilisateur,
- sur un exemplaire (9) présent de la pièce, ou
- sur une image (11) d'un exemplaire (9) présent de la pièce,
iii. un dispositif de reconnaissance (45) destiné à reconnaître le geste comme étant un geste prédéfini qui représente un symbole,
iv. un dispositif de sélection (45) destiné à sélectionner un résultat de mesure en fonction du geste reconnu.

10. Dispositif selon la revendication précédente, dans lequel le symbole est un symbole de forme et/ou un symbole de position qui définit le type d'évaluation fourni en tant que résultat de mesure pour des coordonnées mesurées de la pièce ou une région de la pièce, et dans lequel le dispositif de reconnaissance (45) est conçu pour reconnaitre le geste en tant que symbole.

11. Dispositif selon l'une des revendications précédentes, dans lequel le dispositif comporte un dispositif de détection de position (45) destiné à détecter une position à laquelle le geste est exécuté.

12. Dispositif selon la revendication précédente, dans lequel le dispositif comporte un dispositif de détermination (45) destiné à déterminer une position et une orientation de l'exemplaire (9) de la pièce, qui détermine automatiquement, dans le cas où le geste est exécuté sur l'exemplaire (9) présent de la pièce, la position et l'orientation de l'exemplaire (9), et dans lequel le dispositif de sélection (45) est conçu pour sélectionner le résultat de mesure en fonction d'un résultat de la détermination de la position et de l'orientation de l'exemplaire (9) et en fonction de la position détectée du geste.

13. Dispositif selon l'une des revendications précédentes, dans lequel le dispositif comporte en outre un dispositif de détection d'orientation (45) destiné à détecter une orientation du geste et dans lequel le dispositif de sélection (45) est conçu pour sélectionner également le résultat de mesure en fonction de l'orientation détectée du geste.

14. Dispositif selon l'une des revendications précédentes, dans lequel l'exemplaire (9) de la pièce se situe à l'arrière d'un dispositif d'affichage d'image (3) tel qu'il est vu depuis une position d'observation (7) de l'utilisateur et dans lequel l'utilisateur exécute le geste sur le dispositif d'affichage d'image (3).

15. Dispositif selon l'une des revendications précédentes, dans lequel le dispositif comporte un dispositif de détection destiné à détecter une position et/ou une direction de visée de l'utilisateur et dans lequel le dispositif de sélection (45) est conçu pour prendre en compte la position et/ou la direction de visée de l'utilisateur lors de la sélection du résultat de mesure.
